# EUROPÄISCHE PATENTSCHRIFT

(11) **EP 1 638 404 B1**
(45) Veröffentlichungstag und Bekanntmachung des Hinweises auf die Patenterteilung: **22.08.2007**
(21) Anmeldenummer: 04740530.3
(22) Anmeldetag: 01.07.2004
(51) Int. Cl.: A01N 53/00, A01N 25/32

(54) **PARASITIZIDE UND REPELLIERENDE ZUSAMMENSETZUNG ZUR TOPISCHEN ANWENDUNG AUF DOMESTIZIERTEN TIEREN**
PARASITICIDAL, REPELLENT COMPOSITION FOR TOPICAL USE ON DOMESTIC ANIMALS
COMPOSITION PARASITICIDE ET REPULSIVE POUR UTILISATION TOPIQUE SUR DES ANIMAUX DOMESTIQUES

(30) Priorität: 02.07.2003 DE 10329993; 14.08.2003 DE 10337305
(43) Veröffentlichungstag der Anmeldung: 29.03.2006
(73) Patentinhaber: Andresen, Uwe, 25767 Albersdorf (DE)
(72) Erfinder: Andresen, Uwe, 25767 Albersdorf (DE)
(74) Vertreter: Pott, Ulrich
(86) Internationale Anmeldenummer: PCT/EP2004/007163
(87) Internationale Veröffentlichungsnummer: WO 2005/002339

(56) Entgegenhaltungen:
- EP-A- 0 125 471
- WO-A-91/13545
- DATABASE BIOSIS [Online] BIOSCIENCES INFORMATION SERVICE, PHILADELPHIA, PA, US; 1997, BAST G E ET AL: "Permethrin absorption not detected in single-pass perfused rabbit ear, and absorption with oxidation of 3-phenoxybenzyl alcohol" XP002302357 Database accession no. PREV199799465119 & ARCHIVES OF TOXICOLOGY, Bd. 71, Nr. 3, 1997, Seiten 179-186, ISSN: 0340-5761

## Beschreibung

Die Erfindung betrifft eine parasitizide und repellierende Zusammensetzung zur topischen Anwendung auf domestizierten Tieren mit dem Pyrethroid Permethrin als Wirkstoff.

Pyrethroide haben literaturbekannt eine gute Wirksamkeit gegen Ektoparasiten gezeigt. Geeignete Pyrethroide umfassen Permethrin, Phenothrin, Cypermethrin, Cyhalothrin, Tralomethrin, Deltamethrin, Tralocythrin und Flumethrin usw.. Das am meisten bevorzugten Pyrethroid zur Verwendung bei dieser Erfindung ist Permethrin, d.h. 3-(Phenoxyphenyl)methyl(1 RS)-cis,trans-3-(2,2-dichlorethenyl)-2,2-dimethylcyclopropancarboxylat.

Ektoparasiten wie Zecken, Flöhe, Läuse, Haarlinge und Milben werden auf Säugetieren wie Hunde häufig gefunden. Ektoparasiten ernähren sich von ihrem Wirtstier und stellen eine ständige lrritationsquelle für das Tier dar. Darüber hinaus haben sie als Überträger von Krankheitserregern Bedeutung erlangt (Borreliose, Istheme usw.). Es ist daher wünschenswert, derartige Befälle zu verhindern und zu eliminieren. Damit ist gemeint, daß erstrebenswerterweise alle Parasiten auf dem Wirft getötet werden und der Befall reduziert wird.

Es gibt bekannte Zusammensetzungen und Verfahren zur Kontrolle und Bekämpfung von Ektoparasiten, von denen jedoch die meisten systemische Produkte sind, d.h. daß es sich dabei um solche handelt, die Wirkstoffe enthalten, die in die Blutbahn der Tiere eindringen, um den insektiziden Infekt hervorzurufen. Systemische Insektizide sind trotz ihrer ausgezeichneten Wirksamkeit weniger wünschenswert, wenn andere nahezu gleichwertige, äußerlich zu verwendende Möglichkeiten bestehen. Unabhängig davon haben sie außer ihrer Wirksamkeit gegen Flöhe kaum oder gar keine Wirksamkeit bei der Kontrolle des Zeckenbefalls. Sie müssen mit Hilfe von Injektionen oder Tabletteneingabe verabreicht werden, beides Applikationsformen, die häufig auf Schwierigkeiten stoßen, gefährlich sein können und von den Tierbesitzern meistens abgelehnt werden.

Die DE 101 17 676 A1 beschreibt ein Zweiwirkstoffgemisch mit 35 bis 60 Gew.-% des Wirkstoffs Permethrin und 2,5 bis 12 Gew.-% des Wirkstoffs Imidacloprid oder Imidaclopridanalogon. Als Trägerstoff der Wirkstoffe wird N-Methylpyrrolidon eingesetzt. Weitere übliche, pharmazeutisch annehmbare Hilfsstoffe wie z.B. Spreitmittel und Tenside können zugesetzt sein. Zwar wird in der Druckschrift behauptet, das Mittel habe eine ausgezeichnete Hautverträglichkeit. Das von der Anmelderin dieser Patentanmeldung vertriebene Produkt mit identischer Zusammensetzung führt jedoch als mögliche Nebenwirkungen bei Hunden eine vorübergehende Überempfindlichkeit der Haut (einschließlich verstärkter Juckreiz, Haarausfall und Rötung an der Anwendungsstelle) oder Lethargie auf. Diese hautirritierende Wirkung des Permethrins ist in der Literatur bekannt.

Die DE 35 31 920 A1 beschreibt ein Verfahren zur Herstellung eines Mittels zur Bekämpfung von Ektoparasiten bei Ziegen im Aufgießverfahren. Das Mittel enthält 0,01 bis 50 Gewichtsteile der Pyrethroide Cyfluthrin, Fenfluthrin, Flumethrin, Cypermethrin, Deltamethrin, deren Stereoisomere, Enantiomere oder Gemische sowie ein hautverträgliches Verdünnungsmittel und ggf. Emulgatoren und Hilfsstoffe. Als geeignete Hilfsstoffe Haftvermittler, Tenside und Spreitmittel genannt.

Die DE 35 29 693 A1 beschreibt ein Mittel für ein Verfahren zur Behandlung von Herdentieren und vergesellschaftet lebenden Tieren zur Bekämpfung von Ektoparasiten. Das Mittel enthält Cyfluthrin, Flumethrin, Cypermethrin, Deltamethrin, Fenfluthrin, deren Enantiomere oder Diastereomere oder Gemische derselben neben hautverträglichen Verdünnungsmitteln sowie ggf. Emulgatoren und weiteren Hilfsstoffen. Die Konzentration des Wirkstoffs beträgt 0,01 bis 10 Gew.-%.

Die GB-A-2088212 offenbart eine flüssige Zusammensetzung, die bis zu ungefähr 50 Gew.-% eines Pyrethroids enthält und ein Verfahren für ihre topische Anwendung beinhaltet. Genauer gesagt offenbart die GB-A-2088212 die Lösung fester Pyrethroide in flüssiger Formulierung unter Verwendung unerwünschter irritierender organischer Lösungsmittel wie Xylol, Toluol und Cyclohexanon wahlweise in Verbindung mit Alkylglycolethern.

Die EP 0 518 989 B1 und die DE 691 26 776 T2 offenbaren flüssige Zusammensetzungen von mehr als 50 Gew.-% und bis zu 85 Gew.-% eines Pyrethroids sowie eines Trägers, der ein Alkylglycolether ist, um eine Zusammensetzung zur Kontrolle von Ektoparasiten auf domestizierte Säugetieren, gewählt aus Ratten, Mäusen, Kaninchen, Hunden, Rindvieh, Geflügel, Schweinen und Pferden, mittels topischer Anwendung herzustellen.

Die genannte Erfindung umfaßt 65 Gew.-% bis 85 Gew.-% Permethrin und einen Akylglycolether als Träger. Dabei wird als neu und überraschend herausgestellt, daß diese konzentrierende Formulierung keine Irritation oder Toxizität auf der Haut hervorruft. Es wäre zu erwarten, daß derart hochkonzentrierte Lösungen eines Pyrethroids, wenn auf die Haut appliziert und von dort resorbiert, außerdem systemische Toxizität bewirken würden.

Dieser Anspruch des Patentes EP 0 518 989 B1 und DE 691 26 776 T2 ist nicht aufrechtzuerhalten. Die jahrzehntelange erfolgreiche Vermarktung des einzigen Produktes mit der genannten Applikationsform ist als "Exspot^{®}" der Firma ESSEX TIERARZNEI, Thomas-Dehler Str. 27, 8737 München, im Handel. Dieses Produkt, wie auch ein weiteres mit Wirkung vom 26.04.2003 zugelassenes, derzeit nicht im Handel befindliches Arzneimittel "FLETIC^{®}" der Firma Supplexan, 22085 Hamburg, Schenkendorfstr. 15, haben auf Anordnung der Arzneimittel-Zulassungsbehörde als Nebenwirkungen aufzuführen: "An der Applikationsstelle kann Juckreiz auftreten, gelegentlich kann es zu Haarausfall und Blasenbildung an der Applikationsstelle kommen". Diese unerwünschten Effekte, die von Tieren, Tierärzten und Tierbesitzern als sehr unangenehm empfunden werden, sind literaturbekannte Eigenschaften des Permethrins und in ihrer Intensität direkt abhängig von der Konzentration und Verweildauer des Wirkstoffes auf der Haut. Humanmedizinische Kasuistiken und epidemiologische Studien beschreiben als Nebenwirkung von Pyrethroiden Parästhesien auf der Haut (Kribbeln, Brennen usw.). Diese Effekte können mit einer Latenzzeit von wenigen Minuten bis zu mehreren Stunden nach Hautkontakt von unverdünntem Permethrin oder anwendungsbereiten Lösungen kommen.

Die in den Patenten EP 0 518 989 B1 und DE 691 26 776 T2 verwendeten Hilfsmittel (Lösungsmittel) gehören der Stoffklasse der Alkylglycolether an. Es handelt sich dabei um fast geruchlose Flüssigkeiten mit hohem Siedepunkt, sehr guter Löslichkeit in Wasser und sehr guter Mischbarkeit mit organischen Lösungsmitteln. Bei Alkylglycolether handelt es sich meistens um hygroskopische Flüssigkeiten, die zumindest bei dermaler Applikation als untoxisch gelten (LD 50 dermal Kaninchen 6450 mg/kg KG). Ihr Einsatz in der Dermatologie als penetrationsfördernde Hilfsmittel ist umstritten, da auch eine Penetrationsreduzierung, abhängig von der Formulierung, durch sie auftreten kann. Insbesondere können die hygroskopischen Eigenschaften dieser Lösungsmittelgruppe zusätzlich nachteilig im Hinblick auf das Penetrieren von hydrophoben Wirkstoffen durch die Haut sein.

Bedingt durch die gute Wasserlöslichkeit des Alkylglykolethers wird die Zuammensetzung nach dem Auftragen auf die Haut des zu behandelnden Tieres bei Kontakt mit Wasser, z.B. durch Regen oder beim Baden, von dem Tier abgewaschen. Hierdurch entsteht ein wirtschaftlicher Schaden, da die Lösung anschließend neu aufgetragen werden muß. Zudem kann das in die Umwelt gelangte Permethrin die Umwelt unnötig belasten. Ein weiterer Nachteil dieser Zusammensetzung besteht darin, daß die Lösung bedingt durch die hygroskopischen Eigenschaften des Alkylglykolethers, schnell Wasser aufnimmt, wodurch unerwünschte Trübungen in der Zusammensetzung entstehen. Um diese Trübungen zu verhindern, müssen aufwendige und teure Bedingungen während der Herstellung der Zusammensetzung eingehalten werden.

Die Erfindung befaßt sich mit dem Problem, eine parasitizide und repellierende Zusammensetzung mit dem Wirkstoff Permethrin zur topischen Anwendung auf domestizierten Tieren bereitzustellen, die bei hoher Wirksamkeit und einfach anzuwenden ist, keine Hautirritationen im Anwendungsbereich verursacht und kostengünstig sowie umweltschonend in der Herstellung bzw. Anwendung ist.

Die Erfindung löst dieses Problem durch eine Zusammensetzung mit den Merkmalen des Patentanspruchs 1.

Bei der erfindungsgemäßen Zusammensetzung wird Permethrin in einer sehr hohen Konzentration von 50 bis 90 Gew.-% in Isopropylmyristat gelöst. Überraschenderweise wurde festgestellt, daß speziell dieser Trägerstoff nicht nur als Lösungsmittel fungiert, sondern gleichzeitig eine Carrier-Funktion (Transportfunktion) übernimmt und das Permethrin schnell von der Hautoberfläche weg in die fetthaltigen, tiefgelegenen Fellschichten der Hornhaut (stratum cornum) transportiert, die der Oberhaut (Epidermis) zuzurechen sind, und es dort keine Hautirritationen mehr auslöst aber dennoch wirksam ist. Gleichzeitig wird durch diesen schnellen Transport des Permethrins von der Hautoberfläche weg ein Auswaschen durch Kontakt mit Wasser verhindert.

Es ist überraschend zu erkennen, daß die insektizide Zusammensetzung der vorliegenden Erfindung mit einem derart hohen Prozentsatz des aktiven Inhaltstoffes Permethrin als Wirkstoff und Isopropylmyristat als Trägerstoff gegen Ektoparasiten wirksam ist und dabei im Gegensatz zu den vorgenannten Erfindungen und den aus ihnen resultierenden Arzneimittel-Zulassungen keinerlei Hautirritationen und Hautschäden herbeiführt. Die erfindungsgemäße Zusammensetzung, mit einem Permetringehalt, der ohne Isopropylmyristat zu Hautunverträglichkeiten führen würde, gestattet die Verabreichung kleiner, leicht applizierbarer Dosen in Verbindung mit dem genannten Lösungsmittel ohne Nebenwirkungen. Hierfür ist keine besondere Sachkenntnis, wie bei der Verabreichung mit Hilfe einer Spritze erforderlich. Auch wird die häufig für den Tierbesitzer gefährliche Zwangverabreichung von Tabletten vermieden.

Permethrin hat ein Molgewicht von 391,29 g/mol und technisches Permethrin umfaßt ungefähr 25 bis 80 Gew.-% cis- und ungefähr 20 bis 75 Gew.-% trans-Isomer. Für die vorliegende Erfindung ist technisch hergestelltes Permethrin besonders geeignet. Insbesondere geeignet ist eine Minimalmenge des trans-Isomers von ungefähr 45 Gew.-% und eine Minimalmenge des cis-Isomers von 35 Gew.-%.

Bei einer bevorzugten Ausgestaltung der Erfindung enthält die Zusammensetzung 65 Gew.-% Permethrin und 35 Gew.-% Isopropylmyristat als Trägerstoff, wobei das Permitrin vorzugsweise eine Minimalmenge des trans-Isomers von 45 Gew.-% und eine Minimalmenge des cis-Isomers von 35 Gew.-% aufweist.

Fettsäureester, insbesondere Isopropylmyristat, zeichnen sich durch hohe oxidative und hydrolytische Stabilität aus. Eine besondere Eigenschaft dieser Substanz liegt in der ausgezeichneten Spreitbarkeit (Verteilung auf der Haut) und dem besonders schnellen Einziehen in die oberen Hautschichten. Bei einer hervorragenden Mischbarkeit mit Ölen und lipophilen Substanzen ist die Substanz nicht mit Wasser mischbar.

Es war überraschend zu erkennen, daß schon eine verhältnismäßig kurze Reduktion der Verweildauer auf der Haut durch Verwendung des neuen Lösungsmittels Isopropylmyristat zu einer nahezu 100 %-igen Reduktion der Hautirritationen von Permethrin bei dermaler Applikation als sog. Spot-on-Formulierung führte (s. Kasuistik der beigefügten Hautverträglichkeitsstudie bei Hunden).

Neu und überraschend für Fachleute ist daher, daß durch die kurze Verweildauer des Permethrins bei Verwendung von Isopropylmyristat als Trägersubstanz lrritationen und Hautschäden, wie sie immer wieder bei der Verwendung anderer Trägersubstanzen als Lösungsmittel als äußerst unerwünschte Nebenwirkungen beobachtet werden, nicht auftreten. Diese neue Erkenntnis stellt aus Gründen des Tierschutzes und der Anwender-Compliance einen erheblichen Fortschritt dar.

Die Erklärung dafür ist darin begründet, daß die Trägersubstanz in Verbindung mit hydrophoben Substanzen zu einem schnellen Eindringen der Trägersubstanz in die Lipidbereiche der Unterhaut oder genauer, in den Bereich der fetthaltigen, tief gelegenen Fellschichten der Hornhaut (stratum cornum), die der Oberhaut (epidermis) zuzurechnen sind, führt. Bedingt durch die hydrophobe Eigenschaft des Isopropylmyristats dringt das Permethrin nicht in dort befindliche Blutgefäße ein, was zur Folge hätte, daß das Permethrin systemisch wirken würde und z.B. unerwünschte Lethargien auslösen könnte.

Die vorliegende Erfindung beruht auf der Erkenntnis, daß eine schnellere Penetration des Permethrins durch die äußere Hautschicht die Aufnahmegeschwindigkeit des Arzneimittels erhöht und damit die Verweildauer auf der Haut reduziert.

Literaturbekannt ist außerdem, daß die Wirkung von Permethrin dosisabhängig ist. Demzufolge wäre mit einer Verbesserung der Resorptionsrate und -geschwindigkeit grundsätzlich eine Dosiserhöhung zu erreichen. Dieser Nebeneffekt der vorliegenden Erfindung hat insofern Bedeutung, als auf der einen Seite literaturbekannt systemisch toxische Effekte des Permethrins bei Säugetieren in weiten Bereichen nicht annährend erreicht werden, auf der anderen Seite aber die toxischen Effekte auf der Haut eine Dosiserhöhung des Wirkstoffes bei der vorliegenden Applikationsform verbieten.

Nach der vorliegenden Erfindung wird indirekt eine Dosiserhöhung dadurch erreicht, daß mit Hilfe des verwendeten Lösungsmittels eine schnellere und stärkere Resorption des Wirkstoffs in das Unterhautfettgewebe bzw. genauer in den Bereich der fetthaltigen, tief gelegenen Fellschichten der Hornhaut (stratum cornum) erfolgt.

Neu und bedeutungsvoll ist außerdem, daß durch die rein lipophile Formulierung wie z.B. bei der Verwendung des Fettsäureesthers Isopropylmyristat ein Auswaschen des Wirkstoffs durch Baden unterbleibt und somit die Wirkungsdauer von vier Wochen nicht unterbrochen wird. Neu und eine Folge davon ist darüber hinaus, daß dadurch, daß die Erfindung aus wasserunlöslichen Bestandteilen besteht, ein erheblicher Beitrag zum Umweltschutz geleistet wird in der Weise, daß bei versehentlichem Baden, insbesondere von Hunden, kein Wirkstoff in die Natur gelangt.

Isopropylmyristat ist zudem nicht hygroskopisch, so daß keine galenischen Probleme in Form von Trübungen bei der Herstellung auftreten. Entsprechend sind auch keine teuren Maßnahmen zur Verhinderung dieser Trübungen notwendig.

Weitere Lösungsmittel könnten organische Substanzen wie einfache und mehrwertige Alkohole, Ester, Ketone, organische Salze und Säuren sein, wenn sie in ihren physikalischen und toxischen Eigenschaften dem verwendeten Trägerstoff Isopropylmyristat entsprechen und mit Permethrin kompatibel sind. Insbesondere eignen sich zudem 1-Butanol und Triglyceride mit mittelkettigen Fettsäuren, insbesondere ein Gemisch von Triglyceridestern gesättigter, mittelkettiger Fettsäuren, meist natürlicher Herkunft, mit einem geringen Anteil ungesättigter Fettsäuren. Diese Substanzen haben eine gute Stabilität und ein hervorragendes Hauteindringungsvermögen.

Als weitere Inhaltsstoffe können der vorliegenden Zusammensetzung Verteilungsagenzien, Lockmittel, Repellentien, Haftvermittler, Spreitmittel, Stabilisatoren, Konditionierer, Parfums, Fellglänzmittel und Farbagenzien hinzugefügt werden. Derartige Substanzen sind literaturbekannt und finden in der kosmetischen Industrie breite Anwendung.

Um die insektizide Zusammensetzung der vorliegenden Erfindung herzustellen, wird das Pyrethroid zur vollständigen Lösung eventuell vorhandener Kristalle auf 65°C bis 80 °C erwärmt. Das flüssige Lösungsmittel wird in ein getrenntes, nicht erwärmtes Reaktionsgefäß gegeben, dem das Permethrin zugefügt und bis zur Gleichmäßigkeit vermischt wird. Pharmazeutische und kosmetische Additive können zuvor dem Reaktionsgefäß zugesetzt werden. Die Zusammensetzung kann auf das Wirtstier mittels jeglicher herkömmlicher Methoden für die lokale Applikation verabreicht werden. Dabei ist literaturbekannt, daß bei der geschilderten Konzentration und Menge des Wirkstoffs ein 1-ml-Volumen der bevorzugten Flüssigkeitszusammensetzung bei Hunden mit weniger als 15 kg Körpergewischt ausreichend wirksam ist. Ein 1-2-ml-Volumen des bevorzugten 65 Gew.-% Permethrin (65 mg bis 130 mg Permethrin) ist ausreichend für Hunde, die größer als 15 kg sind. Dafür werden 1 ml der genannten Lösung zwischen die Schulterblätter und 1 weiterer ml an der Schanzwurzel, d.h. am oberen Ende, nachdem die Haare geteilt wurden, appliziert. Nachfolgend werden erfindungsgemäße Zusammensetzungen beispielhaft aufgeführt und erläutert:
- Produkt 1:: 65 Gew.-% Permethrin + 35 Gew.-% n-1-Butanol
- Produkt 2:: 65 Gew.-% Permethrin + 35 Gew.-% Isopropylmyristat
- Produkt 3:: 65 Gew.-% Permethrin + 35 Gew.-% Triglyceride

Die drei Produkte wurden in In-vivo-Untersuchungen hinsichtlich möglicher Hautirritationen untersucht. Die Untersuchungsprotokolle sind nachfolgend beigefügt. Es zeigt sich, daß keine Hautirritationen in Form von Brennen, Juckreiz und Hautschäden festgestellt werden konnten. Den Untersuchern waren die Lösungsmittel der mit 1, 2, 3 bezeichneten Produkte nicht bekannt.

Die obige Hautverträglichkeitsstudie wurde von fünf unabhängigen praktizierenden Tierärzten und einem pharmazeutischen Sachverständigen durchgeführt. Sie umfaßte Hunde aus verschiedenen Rassen, weibliche sowie Rüden, im Alter von 10 Wochen bis 8 Jahren. In zwei Fällen wurde eine schwache Hautreaktion beobachtet (Produkt 1). Alle übrigen Tiere zeigten auch in den Tagen nach der Applikation keine Nebenwirkungen, wie sie z.B. bei der Verwendung von 2-(2-Methylethoxy)ethanol laut Produktinformation EXSPOT^{®} beschrieben werden.

Die verwendeten, in einfacher Blindstudie geprüften Produkte sind problemlos anwendbar und stellen aufgrund ihrer reaktionslosen Anwendung einen Fortschritt gegenüber der bisherigen Formulierung dar. Darüber hinaus sind die geprüften Trägerstoffe aufgrund ihres chemisch-physikalischen Verhaltens jeweils für verschiedene Verpackungsformen (Glas, Kunststoff) geeignet.

**Hautverträglichkeitsstudie "Fletic"/Permethrin**

| mit Lösungsmittel : | | Produkt 1 : | n-1-Butanol | | | |
|---|---|---|---|---|---|---|
| | | Produkt 2 : | Isopropylmyristat | | | |
| | | Produkt 3 : | Triglyceride | | | |
| Datum | Rasse | Alter | Geschlecht | Dosis | Produkt "Fletic" | Reaktion, Juckreiz, Brennen, Rötung |
| 23.06.03 | Teckel | 8 | ♂ | 1 ml | 1 | --- |
| 23.06.03 | Chihuahua | 6 | ♀ | 1 ml | 1 | --- |
| 16.06.03 | Hütehund | 7 | ♂ | 2 ml | 1 | +-- |
| 16.06.03 | Terrier Mischling | 5 | ♂ | 1 ml | 1 | --- |
| 17.06.03 | Bordercollie | 4 | ♂ | 2 ml | 2 | --- |
| 18.06.03 | Ung. Hirtenhund | 7 | ♂ | 2 ml | 2 | --- |
| 20.06.03 | Drahthaar | 5 | ♀ | 2 ml | 2 | --- |

| | | | | | | |
|---|---|---|---|---|---|---|
| Reaktion: +++ (stark) ++- (mäßig) +-- (schwach) --- (keine) | | | | | | |

| Untersucher: | | | |
|---|---|---|---|
| Prof. Dr. U. Andresen 25767 Albersdorf Tierarzt | Dr. Kl. Gouverneur 25481 Nordhastedt prakt. Tierarzt | Dr. Th. Winter 25408 Ostrohe Tierarzt | DVM Kalkofen 25767 Albersdorf Meiereistr. 1 Tierarzt |
| Dr. Folke Rohrssen Kilcoran/Cahir Republik Irland Tierarzt | Annika Scheidegger Kilcoran/Cahir Republik Irland Tierärztin | Dr.rer.nat. Hans Schlüter Albersstr. 5 27793 Wildeshausen Chemie-Pharmazie | |

**Hautverträglichkeitsstudie "Fletic"/Permethrin**

| mit Lösungsmittel : | | Produkt 1 : | n-1-Butanol | | | |
|---|---|---|---|---|---|---|
| | | Produkt 2 : | Isopropylmyristat | | | |
| | | Produkt 3 : | Triglyceride | | | |
| Datum | Rasse | Alter | Geschlecht | Dosis | Produkt "Fletic" | Reaktion, Juckreiz, Brennen, Rötung |
| 11.06.03 | Ung. Hirtenhund | 7 | ♂ | 2 ml | 2 | --- |
| 11.06.03 | Langhaardackel | 6 | ♂ | 1 ml | 2 | --- |
| 11.05.03 | Terriermischung | 7 | ♂ | 1 ml | 1 | --- |
| 11.06.03 | Ridgebaker | 5 | ♂ | 2 ml | 2 | --- |
| 20.06.03 | Dobermann | 6 | ♂ | 2 ml | 1 | --- |
| 20.06.03 | Bordercollie | 3 | ♀ | 2 ml | 2 | +-- |
| 20.06.03 | Bordercollie-Mix | 8 | ♂ | 2 ml | 2 | --- |

| | | | | | | |
|---|---|---|---|---|---|---|
| Reaktion: +++ (stark) ++- (mäßig) +-- (schwach) --- (keine) | | | | | | |

| Untersucher: | | | |
|---|---|---|---|
| Prof. Dr. U. Andresen 25767 Albersdorf Tierarzt | Dr. K1. Gouverneur 25481 Nordhastedt prakt. Tierarzt | Dr. Th. Winter 25408 Ostrohe Tierarzt | DVM Kalkofen 25767 Albersdorf Meiereistr. 1 Tierarzt |
| Dr. Folke Rohrssen Kilcoran/Cahir Republik Irland Tierarzt | Annika Scheidegger Kilcoran/Cahir Republik Irland Tierärztin | Dr.rer.nat. Hans Schlüter Albersstr. 5 27793 Wildeshausen Chemie-Pharmazie | |

**Hautverträglichkeitsstudie "Fletic"/Permethrin**

| mit Lösungsmittel : | | Produkt 1 : | n-1-Butanol | | | |
|---|---|---|---|---|---|---|
| | | Produkt 2 : | Isopropylmyristat | | | |
| | | Produkt 3 : | Triglyceride | | | |
| Datum | Rasse | Alter | Geschlecht | Dosis | Produkt "Fletic" | Reaktion, Juckreiz, Brennen, Rötung |
| 02.07.03 | Dobermann | 3 | ♀ | 2,0 | 2 | --- |
| 02.07.03 | Weimaraner | 6 | ♂ | 2,0 | 2 | --- |
| 02.07.03 | Bordercollie | 4 | ♂ | 2,0 | 2 | --- |
| 03.07.03 | Langhaardackel | 6 | ♂ | 1,0 | 1 | --- |
| 05.07.03 | Weimaraner | 6 | ♀ | 2,0 | 2 | --- |
| 05.07.03 | Weimaraner | 6 Mo | ♀ | 1,0 | 2 | --- |
| 06.07.03 | Langhaardackel | 8 | kastr, | 1,0 | 2 | --- |

| | | | | | | |
|---|---|---|---|---|---|---|
| Reaktion: +++ (stark) ++- (mäßig) +-- (schwach) --- (keine) | | | | | | |

| Untersucher: | | | |
|---|---|---|---|
| Prof. Dr. U. Andresen 25767 Albersdorf Tierarzt | Dr. Kl. Gouverneur 25481 Nordhastedt prakt. Tierarzt | Dr. Th. Winter 25408 Ostrohe Tierarzt | DVM Kalkofen 25767 Albersdorf Meiereistr. 1 |
| Dr. Folke Rohrssen Kilcoran/Cahir Republik Irland Tierarzt | Annika Scheidegger Kilcoran/Cahir Republik Irland Tierärztin | Tierarzt Dr.rer.nat. Hans Schlüter Albersstr. 5 27793 Wildeshausen Chemie-Pharmazie | |

**Hautverträglichkeitsstudie "Fletic"/Permethrin**

| mit Lösungsmittel : | | Produkt 1: | n-1-Butanol | | | |
|---|---|---|---|---|---|---|
| | | Produkt 2 : | Isopropylmyristat | | | |
| | | Produkt 3 : | Triglyceride | | | |
| Datum | Rasse | Alter | Geschlecht | Dosis | Produkt "Fletic" | Reaktion, Juckreiz, Brennen, Rötung |
| 09.07.03 | Drahthaardackel | 5 | ♀ | 2,0 | 2 | - |
| 09.07.03 | Langhaardackel | 13 | ♂ | 1,0 | 1 | --- |
| 11.07.03 | Weimaraner | 5 | ♂ | 2,0 | 2 | --- |
| 13.07.03 | Whippet | 3 | ♀ | 1,0 | 1 | |
| 13.07.03 | Labrador | 10 Wo | | 1,0 | 2 | --- |
| 13.07.03 | Kurzhaardackel | 1 | | 2,0 | 2 | --- |
| 13.07.03 | Schäferhund | 2 | | 2,0 | 2 | --- |
| 13.07.03 | Husky | 1 | | 2,0 | 3 | --- |

| | | | | | | |
|---|---|---|---|---|---|---|
| Reaktion: +++ (stark) ++- (mäßig) +-- (schwach) --- (keine) | | | | | | |

| Untersucher: | | | |
|---|---|---|---|
| Prof. Dr. U. Andresen 25767 Albersdorf Tierarzt | Dr. K1. Gouverneur 25481 Nordhastedt prakt. Tierarzt | Dr. Th. Winter 25408 Ostrohe Tierarzt | DVM Kalkofen 25767 Albersdorf Meiereistr. 1 Tierarzt |
| Dr. Folke Rohrssen Kilcoran/Cahir Republik Irland Tierarzt | Annika Scheidegger Kilcoran/Cahir Republik Irland Tierärztin | Dr.rer.nat. Hans Schlüter Albersstr. 5 27793 Wildeshausen Chemie-Pharmazie | |

## Patentansprüche

1. Parasitizide und repellierende Zusammensetzung zur topischen Anwendung auf domestizierten Tieren, enthaltend 50 - 90 Gew.-% Permethrin oder dessen Stereoisomere und Isopropylmyristat in einer zum erreichen von 100 Gew.-% erforderlichen Menge.

2. Zusammensetzung nach Anspruch 1, **dadurch gekennzeichnet, daß** das Permethrin 25 bis 80 Gew.-% cis- und ungefähr 20 bis 75 Gew.-% trans-Isomer enhält.

3. Zusammensetzung nach einem der vorherigen Ansprüche, **dadurch gekennzeichnet, daß** sie 60 bis 90 Gew.-% Permethrin enthält.

4. Zusammensetzung nach einem der vorherigen Ansprüche, **dadurch gekennzeichnet, daß** sie 65 Gew.-% Permethrin enthält.

5. Zusammensetzung nach einem der vorherigen Ansprüche, **dadurch gekennzeichnet, daß** die domestizierten Tiere, Hunde und/oder Pferde sind.

6. Zusammensetzung nach einem der vorherigen Ansprüche, **dadurch gekennzeichnet, daß** sie weitere pharmazeutische und kosmetische Additive enthält.

## Claims

1. Parasiticidal and repellent composition for topical use on domesticated animals, containing 50-90 % by weight of permethrin or its stereoisomers and isopropyl myristate in sufficient quantities to amount to 100% by weight.

2. Composition according to claim 1, **characterised in that** the permethrin contains 25 to 80 % by weight cis-isomer and approximately 20 to 75 % by weight of trans-isomer.

3. Composition according to one of the preceding claims, **characterised in that** it contains 60 to 90 % by weight of permethrin.

4. Composition according to one of the preceding claims, **characterised in that** it contains 65 % by weight of permethrin.

5. Composition according to one of the preceding claims, **characterised in that** the domesticated animals are dogs and/or horses.

6. Composition according to one of the preceding claims, **characterised in that** it contains further pharmaceutical and cosmetic additives.

## Revendications

1. Composition parasiticide et répulsive pour application topique sur des animaux domestiques, et contenant de 50 à 90% en poids de perméthrine ou de ses stéréoisomères et du myristate d'isopropyle, en une quantité nécessaire pour atteindre 100% en poids.

2. Composition suivant la revendication 1, **caractérisée en ce que** la perméthrine contient de 25 à 80% en poids d'isomère cis et environ 20 à 75% en poids d'isomère trans.

3. Composition suivant l'une quelconque des revendications qui précèdent, **caractérisée en ce qu'**elle contient de 60 à 90% en poids de perméthrine.

4. Composition suivant l'une quelconque des revendications qui précèdent, **caractérisée en ce qu'**elle contient 65% en poids de perméthrine.

5. Composition suivant l'une quelconque des revendications qui précèdent, **caractérisée en ce que** les animaux domestiques sont des chiens et / ou des chevaux.

6. Composition suivant l'une quelconque des revendications qui précèdent, **caractérisée en ce qu'**elle contient d'autres additifs pharmaceutiques et cosmétiques.
